**Europäisches Patentamt**

**European Patent Office**

**Office européen des brevets**

(19)

(11) Veröffentlichungsnummer : **0 148 434**
**B1**

(12) **EUROPÄISCHE PATENTSCHRIFT**

(45) Veröffentlichungstag der Patentschrift :
**25.05.88**

(51) Int. Cl.⁴ : **G 21 C 11/08, F 16 L 59/12,**
**F 16 L 59/14, F 27 D  1/04**

(21) Anmeldenummer : **84115072.5**

(22) Anmeldetag : **10.12.84**

(54) **Heissgasbehälter mit Isolierung aus einander überlappenden keramischen Körpern.**

(30) Priorität : **21.12.83 DE 3346230**

(43) Veröffentlichungstag der Anmeldung :
**17.07.85 Patentblatt 85/29**

(45) Bekanntmachung des Hinweises auf die Patenterteilung : **25.05.88 Patentblatt 88/21**

(84) Benannte Vertragsstaaten :
**BE CH DE FR GB IT LI LU NL**

(56) Entgegenhaltungen :
EP-A- 0 000 497
DE-A- 3 147 725
DE-A- 3 208 883
FR-A- 2 248 582
FR-A- 2 309 019
FR-A- 2 393 405
FR-A- 2 505 977
GB-A- 1 207 036
US-A- 2 451 145
US-A- 2 532 190
US-A- 3 963 936

(73) Patentinhaber : **INTERATOM Gesellschaft mit beschränkter Haftung**
**Friedrich-Ebert-Strasse**
**D-5060 Bergisch Gladbach 1 (DE)**

(72) Erfinder : **Maus, Wolfgang, Dipl.-Ing.**
**Gut Horst**
**D-5060 Bergisch-Gladbach (DE)**
Erfinder : **Miebach, Rolf, Dipl.-Ing**
**Rotter Weg**
**D-5063 Overath-Vilkerath (DE)**
Erfinder : **Swars, Helmut**
**Riedweg 11**
**D-5060 Bergisch-Gladbach 1 (DE)**

(74) Vertreter : **Mehl, Ernst, Dipl.-Ing. et al**
**Postfach 22 01 76**
**D-8000 München 22 (DE)**

EP 0 148 434 B1

## Beschreibung

Die vorliegende Erfindung betrifft einen Heißgasbehälter, insbesondere eine Rohrleitung nach dem Oberbegriff des ersten Anspruchs. Der Einsatz derartiger Heißgasrohrleitungen ist vorgesehen z. B. in Kernenergieanlagen, die mit einem Hochtemperatur-Kernreaktor betrieben werden. Dabei muß von Druckbelastungen von z. B. $40 \times 10^5$ Pa (40 bar) bei Temperaturen von z. B. 950 °C ausgegangen werden. Da keine Werkstoffe zur Verfügung stehen, die zum Rohr geformt den Einschluß von z. B. Helium bei den angegebenen hohen Temperaturen und Drücken gestatten, sollen hierfür Behälter verwendet werden, deren metallische Außenschale den Druckeinschluß besorgt und die durch eine im Inneren angebrachte Isolierung vor zu hohen Temperaturen geschützt wird. Als Isolierstoffe kommen in erster Linie keramische Stoffe in Faser- oder Block- oder Steinform in Frage. Letztere weisen den Nachteil auf, daß zwischen den einzelnen Steinen unvermeidlicherweise Fugen auftreten, durch die heißes Gas an die metallische Außenschale gelangen könnte und deren Abdichtung Probleme bereitet (vergl. DE-A-31 47 725). Auch hat sich gezeigt, daß Isoliersteine, die die gesamte Temperaturspanne von 950 °C auf ca. 300 °C (die höchstzulässige Temperatur für die metallische Außenschale) abbauen müssen, zu Rißbildung neigen, wodurch die Isolierung vorzeitig zerstört würde. Faserisolierungen wiederum lassen sich zwar ohne Fugen herstellen, müssen jedoch besonders gegen die im Inneren des Behälters herrschende Gasströmung gesichert werden und sind nur mit großen Schwierigkeiten in der erforderlichen gleichmäßigen Dichte und damit Isolierwirkung herzustellen. Zur Zeit läßt sich auch nicht der Nachweis erbringen, daß die Fasermaterialien über die im Kernreaktorbau verlangten sehr langen Standzeiten (bis zu 30 Jahren) die Elastizität beibehalten, die nötig ist, um das Schließen der Spalte zwischen den einzelnen Ballen, Matten usw. zu gewährleisten. Es ist daher bereits vorgeschlagen worden (vergl. DE-A-32 08 883) das isolierende Fasermaterial in Kästen aus einem dünnen, hochtemperaturbeständigen Blech anzuordnen und die Rohrleitung, d. h. einen rotationssymmetrischen Behälter mit derartigen, die Gestalt von Sektoren eines Hohlzylinders aufweisenden Kästen auszukleiden, wobei die Abdichtung der Spalte zwischen den Kästen dadurch erfolgt, daß an diese Lappen angeformt sind, die den Spalt übergreifen und für eine kurze Strecke den Nachbarkasten überlappen. Diese Konstruktion erscheint jedoch mit Rücksicht auf ihre größtenteils metallische Bauweise nur für etwas niedrigere Temperaturbereiche geeignet. Wegen der bei steinförmigem Material besser definierbaren und über die Lebensdauer unveränderlichen Dichteverhältnisse wird von Fachleuten dieser Art der Isolierung der Vorzug gegeben.

Aufgabe der vorliegenden Erfindung ist eine solche Isolierung für einen Heißgasbehälter, insbesondere eine Rohrleitung bzw. die zu ihrem Aufbau erforderlichen Einzelteile, bei der die keramischen Körper je für sich nur einen Teil der Temperaturspanne zwischen der Innenseite des Behälters und der druckeinschließenden Außenschale abbauen müssen, und bei der sowohl eine zuverlässige Abdichtung der Spalte zwischen den einzelnen Steinen und zwischen diesen und der Außenschalte gewährleistet ist, als auch ein sicherer und bei der Montage leicht herzustellender Verbund zwischen den einzelnen Steinen, der auch dann erhalten bleibt, wenn ein einzelner Stein durch Temperaturschwankungen oder dergleichen bedingt Risse erhält.

Die Lösung dieser Aufgabe erfolgt durch die im kennzeichnenden Teil des ersten Anspruchs angegebenen Mittel. Dadurch, daß sich die einzelnen Teile größtenteils (im Idealfall vollständig) überlappen, wird die Isolierung aus zwei oder mehr Schichten aufgebaut, von denen jede eine nur geringere Temperaturspanne abzubauen in der Lage sein muß. Gegenüber einer herkömmlichen in mehreren Schichten aufgebauten Isolierung hat die hier vorgeschlagene jedoch den Vorteil, daß trotzdem jeder Einzelkörper unmittelbar am Außenrohr befestigt ist und so einen sichereren Halt aufweist, wozu noch die gegenseitige Halterung der Steine untereinander beiträgt.

Die im zweiten Anspruch vorgeschlagene Ausgestaltung der Erfindung sichert die metallische Außenschale in zuverlässiger Weise gegen die Berührung durch heiße Gase, da die Spalte zwischen den einzelnen Steinen zu in sich abgeschlossenen Taschen werden, in denen das Gas stagniert und so die Isolierung ergänzt. Das Fasermaterial hat nur Verdrängungsaber keine Dichtfunktion. Da hierzu keine auf Dauer zu haltende Elastizität der zur Verfüllung gebrauchten Materialien nötig ist, bestehen auch keine Bedenken wegen der Zeitstandfestigkeit.

Durch den dritten Anspruch wird eine erste Form von keramischen Körpern oder Steinen definiert, wie sie zur Auskleidung des erfindungsgemäßen, rotationssymmetrischen Behälters Verwendung finden können. Dabei liegt es im Belieben des Fachmannes, falls erforderlich, nicht die hier beschriebene einfach abgestufte Form zu verwenden, sondern analog eine mehrfach abgestufte Form zu konstruieren.

Der im dritten Anspruch vorgeschlagene keramische Körper kann gemäß dem vierten Anspruch so ausgestaltet werden, daß eine zusätzliche formschlüssige Verbindung zwischen den einzelnen Körpern hergestellt wird, so daß auch solche Körper in ihrer Lage gehalten werden, die durch einen Riß in zwei Einzelteile getrennt wurden.

Die im fünften Anspruch vorgeschlagene Einzelheit an den genannten Körpern erleichtert die Montage der Isolierung, indem der Ausgleich der unvermeidlicherweise vorhandenen Toleranzen der einzelnen Steine und auch des Außenrohres ermöglicht wird.

Im sechsten Anspruch wird eine zu der vorhergehenden Lösung alternative Form der keramischen Körper vorgeschlagen.

Der im siebenten Anspruch vorgeschlagene Anker zur Befestigung der einzelnen keramischen Körper an der Außenschale hat den Vorteil, daß er erst nach Einpassen des dazugehörigen Körpers an derselben befestigt zu werden braucht, wodurch ebenfalls der Ausgleich von Toleranzen erleichtert wird. Das Anschweißen des Ankers an der Außenschale erfolgt dann von deren Innenseite her. Zugleich ist der Anker durch mindestens die halbe Isolierschichtdicke gegen die Einwirkung der hohen Temperatur geschützt.

Ausführungsbeispiele der Erfindung in Form einer Rohrleitung sind in der Zeichnung dargestellt und zwar zeigt

Fig. 1 einen Längsaxialschnitt entsprechend der Linie I-I der Fig. 2 durch eine erste Ausführungsform,

Fig. 2 den dazugehörigen Querschnitt entsprechend der Linie II-II der Fig. 1,

Fig. 3 in vergrößertem Maßstab die Einzelheit III der Fig. 1,

Fig. 4 einen Längsaxialschnitt entsprechend der Linie IV-IV der Fig. 5 durch eine zweite Ausführungsform,

Fig. 5 den dazugehörigen Querschnitt entsprechend der Linie V-V der Fig. 4 und

Fig. 6 in vergrößertem Maßstab die Einzelheit VI der Fig. 4.

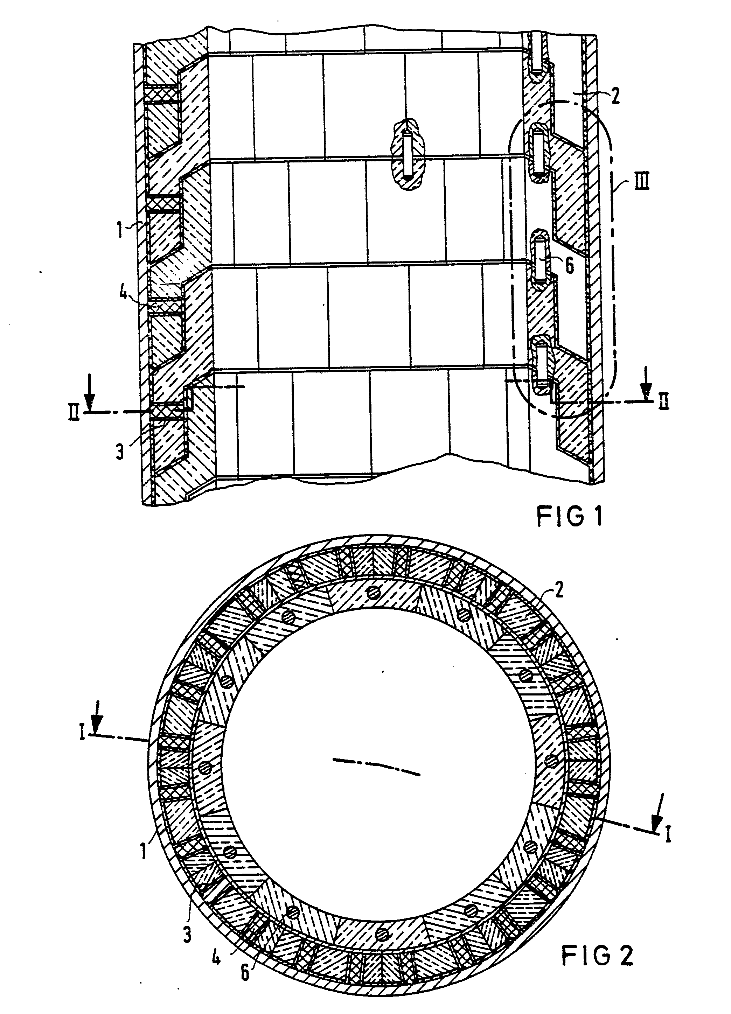

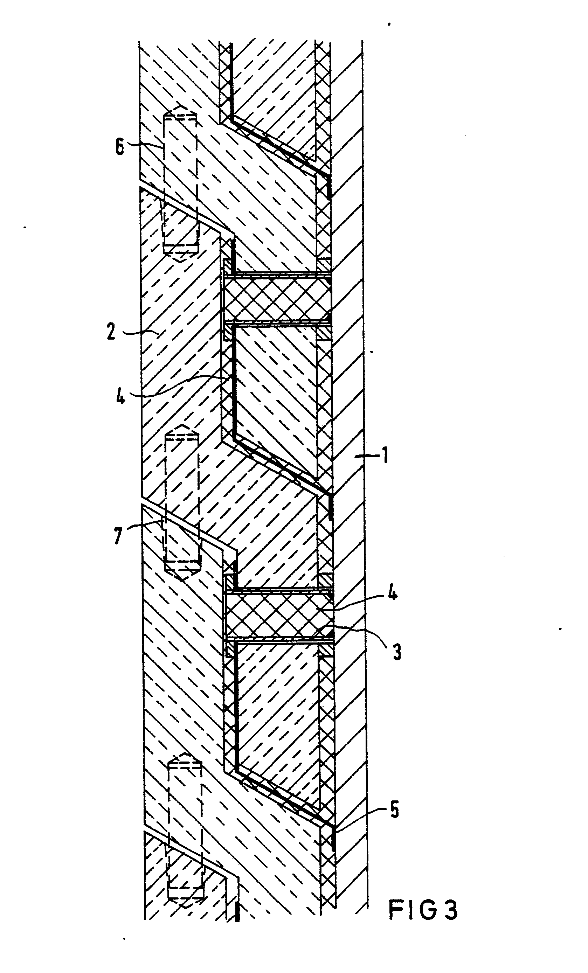

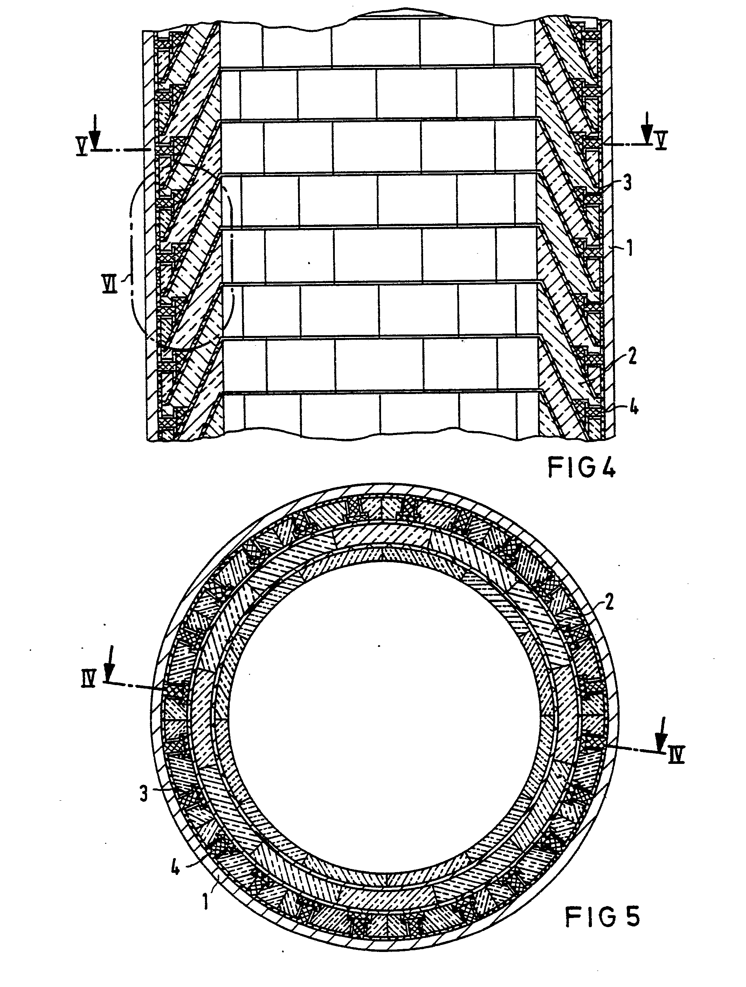

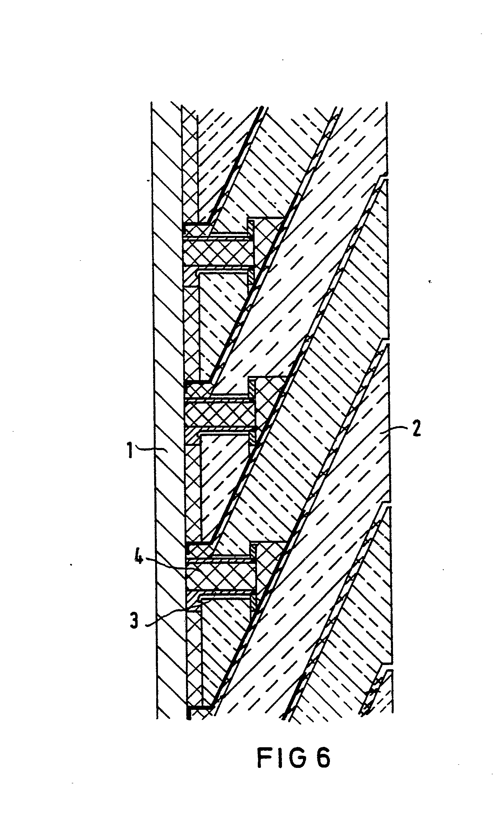

Die Rohrleitung besteht aus einem metallischen Außenrohr 1, das aus einzelnen Schüssen in beliebiger Länge zusammengeschweißt wird und das den Druckeinschluß besorgt; dieses darf höchstens einer Temperatur von 300 °C ausgesetzt werden. Im Inneren der Rohrleitung ist eine Isolierung angeordnet, die aus einzelnen keramischen Körpern 2 aufgebaut ist. Diese sind in bekannter Weise nach Art eines Ziegeldaches gegeneinander versetzt und einander überlappend angeordnet und weisen (Fig. 1-3) die Gestalt je eines Sektors von zwei durch einen hohlkegelstumpfartigen Sektor miteinander verbundenen Hohlzylindern unterschiedlichen Durchmessers auf oder (Fig. 4-6) die eines Hohlkegelstumpfes, an dessen weiterem Ende ein auf seiner Innenseite kegelig angeschrägter Zylinder anschließt und sie werden bei der Montage nacheinander übereinander geschoben. Die Überlappung ist im Falle der in den Fig. 4-6 dargestellten Ausführungsform vollständig, d. h. zwischen der Innenseite der Rohrleitung, in der z. B. Helium bei 950 °C strömt und dem Außenrohr 1 sind zwei vollständige Isolierschichten vorhanden. Bei der in den Fig. 1-3 dargestellten Ausführungsform ist die Überlappung nicht vollständig, doch ist der die Verbindung zwischen den Hohlzylindern herstellende Hohlkegelstumpf in Richtung der Normalen zu seiner Oberfläche auch nur so dünn, daß ein Abbau der Temperaturspanne möglich ist, ohne daß unzulässig hohe Spannungen im Körper auftreten. Zur Herstellung dieser Körper 2 geeignete Werkstoffe sind bekannt, z. B. Silicium- und Aluminiumoxide. Befestigt wird jeder Körper 2 mittels eines Ankers 3, der aus einem kurzen Rohrstück mit angesetztem Flansch an einem Ende besteht und der mit seinem anderen Ende am Außenrohr 1 angeschweißt wird und zwar, nachdem der dazugehörige, zu diesem Zweck mit einer Bohrung versehene Stein 2 in seine richtige Lage gebracht worden ist. Das Innere des Ankers 3 wird dann mit z. B. faserförmigem Isoliermaterial 4 aufgefüllt. Mit dem gleichen Material werden auch die Spalte zwischen den einzelnen Körpern 2 und zwischen diesen und dem Außenrohr 1 aufgefüllt, wodurch die zum Teil recht erheblichen Toleranzen ausgeglichen werden können, die bei handelsüblichen Rohren dieser Größenordnung (z. B. von 1 000 mm Durchmesser) erwartet werden müssen. Zusätzlich kann noch eine gasundurchlässige metallische Folie 5 vorgesehen werden, die in die Fugen eingelegt wird, die sich zugleich axial und in Umfangsrichtung erstrecken und die am Außenrohr 1 angeschweißt wird. Diese unterteilt die Isolierung in einzelne, nicht miteinander in Verbindung stehende kleinere Bereiche, in denen das in der Rohrleitung geführte Gas stagniert und keine nennenswerten konvektiven Strömungen auftreten können; das die Fugen ausfüllende stagnierende Gas trägt selbst zur Isolierung bei. Bei der Ausführungsform nach den Fig. 1-3 sind die einzelnen Körper 2 zusätzlich durch Bolzen 6 miteinander verstiftet, die ebenfalls aus einem keramischen Material hergestellt sein können. Zur Erleichterung der Montage sind dabei die zur Aufnahme der Bolzen bestimmten Bohrungen 7 (siehe Fig. 3) zumindest einseitig kegelig ausgeführt.

**Patentansprüche**

1. Heißgasbehälter mit einer druckfesten, metallischen Außenschale (1) und einer dessen innere Oberfläche bedeckende Wärmeisolierung aus axial einander teilweise überlappend angeordneten keramischen Körpern (2), die je für sich mittels verdeckt an der Außenschale angeschweißter, in Aussparungen derselben eingreifender Anker (3) befestigt sind, dadurch gekennzeichnet, daß zumindest der größte Teil der Oberfläche durch überlappende Teile der keramischen Körper bedeckt ist.

2. Behälter nach Anspruch 1, dadurch gekennzeichnet, daß in den sich zugleich axial und in Umfangsrichtung erstreckenden Fugen zwischen den keramischen Körpern (2) und zwischen diesen und der Außenschale (1) plastisch verformbares Isoliermaterial (4) und gasundurchlässige Folien (5) angeordnet sind.

3. Behälter nach Anspruch 1, dadurch gekennzeichnet, daß die keramischen Körper (2) die Gestalt eines Sektors von zwei oder mehr durch einen oder mehr hohlkegelstumpfartige Sektoren miteinander verbundenen und in der Höhegegeneinander versetzten Hohlzylindern unterschiedlichen Durchmessers haben, wobei der Außendurchmesser des jeweils kleineren Zylinders nur wenig geringer als der Innendurchmesser des jeweils größeren Zylinders ist und die beiden Zylinder koaxial sind.

4. Behälter nach Anspruch 3, dadurch gekennzeichnet, daß die keramischen Körper (2) mit in axialer Richtung verlaufenden Ausnehmungen (7) zur Aufnahme von Verbindungsbolzen (6) versehen sind.

5. Behälter nach Anspruch 4, dadurch gekennzeichnet, daß die Ausnehmungen (7) der keramischen Körper (2) zumindest teilweise kegelig ausgeführt sind.

6. Rotationssymmetrischer Behälter nach Anspruch 1, dadurch gekennzeichnet, daß die keramischen Körper (2) die Gestalt eines Sektors eines Hohlkegelstumpfes haben, an dessen weiterem Ende ein auf seiner Innenseite kegelig abgeschrägter Zylinder anschließt.

7. Behälter nach Anspruch 1, dadurch gekennzeichnet, daß die Anker (7) die Gestalt von am einen Ende mit einem Flansch versehenen, an ihrem anderen Ende nach Einpassung des zugehörigen keramischen Körpers (2) mit der Außenschale (1) verschweißbaren und anschließend mit Isoliermaterial (4) füllbaren Hohlzylindern von einer Länge haben, die höchstens gleich der halben Dicke der Isolierung ist.

## Claims

1. Hot gas vessel with a pressure resistant, metallic outer shell (1) and a thermal insulation covering its interior surface composed of ceramic elements (2) disposed so as partially to overlap one another axially, each independently attached by means of concealed anchors (3) welded to the outer shell and engaging in recesses in the same, characterised in that at least the greatest portion of the surface is covered by overlapping parts of the ceramic elements.

2. Vessel according to claim 1, characterised in that disposed in the joints extending simultaneously axially and in the circumferential direction between the ceramic elements (2) and between these and the outer shell (1) are plastically deformable insulating material (4) and gasimpermeable foils (5).

3. Vessel according to claim 1, characterised in that the ceramic elements (2) have the shape of a section of two or more hollow cylinders of different diameters connected by one or more sections in the shape of a hollow truncated cone, and mutually offset vertically, the external diameter of the respectively smaller cylinder being only slightly smaller than the internal diameter of the respectively larger cylinder and the two cylinders being coaxial.

4. Vessel according to claim 3, characterised in that the ceramic elements (2) are provided with recesses (7) running in the axial direction to accommodate connecting bolts (6).

5. Vessel according to claim 4, characterised in that the recesses (7) of the ceramic elements (2) are at least partially tapered in construction.

6. Rotationally symmetrical vessel according to claim 1, characterised in that the ceramic elements (2) have the shape of a section of a hollow truncated cone against the further end of which butts a cylinder which is bevelled conically on its inner side.

7. Vessel according to claim 1, characterised in that the anchors (7) have the shape of hollow cylinders provided at one end with a flange, weldable at their other end to the outer shell (1) after adaptation of the associated ceramic element (2) and capable of being then filled with insulating material (4), the length of said hollow cylinders being at least most to half the thickness of the insulation.

## Revendications

1. Conteneur à gaz chaud, comprenant une coquille extérieure (1) métallique et résistante à la pression et un calorifugeage en recouvrant la surface intérieure et constitué de pièces (2) en céramique qui se chevauchent axialement en partie et qui sont fixées, chacune indépendamment, au moyen d'éléments d'ancrage (3) masqués, soudés à la coquille extérieure et pénétrant dans des évidements de celle-ci, caractérisé en ce qu'au moins la plus grande partie de la surface est recouverte par des parties à chevauchement des pièces en céramique.

2. Conteneur suivant la revendication 1, caractérisé en ce que des feuilles (5) en matériau isolant (4), déformables plastiquement et imperméables au gaz sont interposées dans les interstices, s'étendant à la fois axialement et en direction périphérique, entre les pièces (2) en céramiques et entre celles-ci et la coquille extérieure (1).

3. Conteneur suivant la revendication 1, caractérisé en ce que les pièces (2) en céramique ont la forme d'un secteur de deux ou de plusieurs cylindres creux de diamètres différents, reliés entre eux par un ou par plusieurs secteurs en forme de tronc de cône et décalés mutuellement en hauteur, le diamètre extérieur du cylindre le plus petit n'étant inférieur que de peu au diamètre intérieur du cylindre le plus grand, et les deux cylindres étant coaxiaux.

4. Conteneur suivant la revendication 3, caractérisé en ce que les pièces (2) en céramique sont munies d'évidements (7) qui s'étendent suivant la direction radiale et qui sont destinés à la réception de tirants de liaison (6).

5. Conteneur suivant la revendication 4, caractérisé en ce que les évidements (7) des pièces (2) en céramique sont au moins en partie coniques.

6. Conteneur de révolution suivant la revendication 1, caractérisé en ce que les pièces (2) en céramique ont la forme d'un secteur d'un tronc de cône creux, à l'autre extrémité duquel se raccorde un cylindre dont le côté intérieur est conique.

7. Conteneur suivant la revendication 1, caractérisé en ce que les éléments d'ancrage (7) ont la forme de cylindres creux qui sont munis d'une bride à une extrémité, qui peuvent être soudés à l'autre extrémité à la coquille extérieure (1), après adaptation de la pièce (2) en céramique correspondante, qui peuvent être emplis ensuite de matériau isolant (4) et qui ont une longueur qui est au plus égale à la moitié de l'épaisseur de l'isolation.

FIG 1

FIG 2

FIG 3

FIG 4

FIG 5

FIG 6